# EUROPÄISCHE PATENTSCHRIFT

(11) **EP 3 110 771 B1**
(45) Veröffentlichungstag und Bekanntmachung des Hinweises auf die Patenterteilung: **14.08.2019**
(21) Anmeldenummer: 15714759.6
(22) Anmeldetag: 19.02.2015
(51) Int. Cl.: C03C 21/00, B23K 26/00, B32B 17/00, C03C 23/00, A01M 29/08

(54) **VERFAHREN ZUR HERSTELLUNG EINER VOGELSCHUTZVORRICHTUNG UND VOGELSCHUTZVORRICHTUNG**
METHOD FOR PRODUCING A BIRD PROTECTION DEVICE AND BIRD PROTECTION DEVICE
PROCÉDÉ DE FABRICATION D'UN DISPOSITIF POUR LA PROTECTION DES OISEAUX ET DISPOSITIF POUR LA PROTECTION DES OISEAUX

(30) Priorität: 27.02.2014 DE 102014002644
(43) Veröffentlichungstag der Anmeldung: 04.01.2017
(73) Patentinhaber: HEGLA boraident GmbH & Co. KG, 37688 Beverungen (DE); Hunsrücker Glasveredelung Wagener GmbH & Co. KG, 55481 Kirchberg (DE)
(72) Erfinder: ARNOLD, Hans-Joachim, 73630 Remshalden (DE); BISCHOFF, Robert, 06114 Halle (DE); KÜRBITZ, Steffen, 06120 Halle (DE); LUSTER, Andreas, 06317 Seegebiet Mansfelder Land (DE); RAINER, Thomas, 38855 Wernigerode (DE)
(74) Vertreter: Fischer, Volker
(86) Internationale Anmeldenummer: PCT/DE2015/000083
(87) Internationale Veröffentlichungsnummer: WO 2015/127919

(56) Entgegenhaltungen:
- EP-A2- 1 479 294
- WO-A1-2013/181033
- WO-A2-2004/070148

## Beschreibung

Die Erfindung betrifft ein Verfahren zur Herstellung einer Vogelschutzvorrichtung gemäß den Oberbegriffen der unabhängigen Ansprüche und eine Vogelschutzvorrichtung.

Mit der zunehmenden Verwendung von Glas in Gebäudehüllen nimmt die Zahl der Vogelschlagereignisse weltweit dramatisch zu. Vögel nehmen die für sie transparenten Glashindernisse nicht wahr und ziehen sich schwerwiegende Verletzungen beim Anflug auf die gläsernen Fassaden zu. "Rund 250.000 Vögel sterben europaweit beim Aufprall auf Fensterscheiben, Glastüren und Fassaden - Tag für Tag. Bis vor kurzem waren die Lösungen der Glasindustrie für das Problem "Vogelschlag" völlig unzureichend. Die immer noch verwendeten, geklebten Greifvogelsilhouetten etwa sind als "Warnsignal" gänzlich unwirksam." [www.ornilux.de].

Im Stand der Technik sind Vogelschutzeinrichtungen bekannt, die in zwei Kategorien unterteilt werden können.

Die erste Kategorie bilden Einrichtungen, die sowohl von Vögeln als auch von Menschen wahrgenommen werden können. Technische Ausführungen sind z.B. Gläser, die mit Strukturen in Form von Punkten, Linien oder Rastern im sichtbaren Spektralbereich (380 nm bis 780 nm) versehen sind (WO 2004/070148 A2, Eckelt: Prospekt 4bird, www.eckelt.at).

Die zweite Kategorie bilden Einrichtungen, die Vögel vor Vogelschlag schützen sollen und für das menschliche Auge möglichst nicht wahrnehmbar sind, um die Ästhetik des Gebäudes nicht zu stören. Hierbei konzentriert sich der Stand der Technik auf die Ausbildung von für das Vogelauge wahrnehmbaren Strukturen im ultravioletten Spektralbereich (UV-A = 315 nm bis 380 nm), die für das menschliche Auge nicht wahrnehmbar sind. So beschreibt die EP 1 110 450 B1 eine Vogelschutzvorrichtung, bei der die Scheibe mit einer Folie versehen ist, die im UV-A Wellenlängenbereich ein höheres Absorptions- oder Reflektionsvermögen hat und damit für den Menschen nicht sichtbar, aber für den Vogel wahrnehmbar ist. In der DE 10 2007 028 543 A1 werden weiterhin verschiedene Möglichkeiten beschrieben, durch Einbringen von Metallionen Strukturen in der Glasoberfläche zu bilden, die im UV-A Bereich für Vögel sichtbar sind, jedoch unsichtbar für den Menschen. Weiterhin existieren Bestrebungen, die Vogelschutzstrukturen durch ihre Dimensionierung so auszulegen, dass der Mensch sie kaum wahrnimmt. In der EP 1 319 335 B1 werden z.B. linienartige Strukturen beschrieben, deren Hauptabmessung kleiner als 0,5 mm, vorzugsweise kleiner 0,1 mm, sind und somit kaum vom Menschen wahrnehmbar sind.

Während Vorrichtungen der genannten Art im Stand der Technik bekannt sind, wird die Umsetzung in die verfahrenstechnische Lösung bisher nur wenig zitiert. So zeigen z.B. die Ausführungen in die DE 10 2007 028 543.6 ein mehrere Schritte umfassendes Verfahren, bei dem im ersten Schritt eine metallionenhaltige Paste über ein Druckverfahren auf die Glasoberfläche aufgebracht wird, im zweiten Schritt die Paste durch Wärmebehandlung bei ca. 70 °C über ca. 4 Stunden getrocknet wird, im dritten Schritt durch Wärmebehandlung des gesamten Glaskörpers bei ca. 500 °C über ca. 45 min eine Diffusion der Metallionen in die Glasoberfläche erzielt wird und anschließend im vierten Schritt die überschüssige Paste durch einen Reinigungsprozess entfernt wird. Dieses Beispiel zeigt, dass die Herstellung von Vogelschutzvorrichtungen, insbesondere der zweiten Kategorie, bisher unbefriedigend gelöst ist. Der umfangreiche, langwierige und aufwendige Fertigungsprozess ist kostenintensiv und führt damit zu einer Vogelschutzeinrichtung mit hohen Herstelllungskosten. Dies hemmt die massenhafte Anwendung dieser Vogelschutzvorrichtungen.

EP1 479 294 A2 und WO 2013/181033 A1 sind weitere Dokumente, die Verfahren zur Herstellung von Vogelschutzvorrichtungen durch Einsatz von Laserstrahlung aufweisen.

Demgemäß besteht die Aufgabe der vorliegenden Erfindung in der Bereitstellung eines kostenärmeren Herstellungsverfahrens für Vogelschutzeinrichtungen, das bevorzugt auch zur Kontrasterhöhung der optischen Strukturen der Vogelschutzeinrichtung führt.

Diese Aufgabe wird durch ein Verfahren zur Herstellung einer Vogelschutzvorrichtung gemäß dem 1. Patentanspruch und durch eine Vogelschutzvorrichtung gemäß dem 10. Patentanspruch gelöst. Vorteilhafte Ausgestaltungen sind in den abhängigen Ansprüchen beschrieben.

Gemäß einem ersten Aspekt der Erfindung wird ein Verfahren zur Herstellung einer Vogelschutzvorrichtung vorgeschlagen, wobei die Vogelschutzvorrichtung aus einem zumindest teiltransparenten Material ausgebildet ist und eine für ein Vogelauge sichtbare, optische Struktur beinhaltet. Das Verfahren umfasst dabei einen Strahlungseintrag, wobei zur Ausbildung der optischen Struktur der Strahlungseintrag im oberflächennahen Bereich vom teiltransparenten Material erfolgt. Der Strahlungseintrag ist eine Laserstrahlung. Geeignete Laser zum Strahlungseintrag sind etwa CO₂-Laser der Wellenlänge 1064 nm, Picosekunden-Laser der Wellenlänge 532 nm oder Nanosekunden-Laser der Wellenlänge 532 nm.

Unter einem teiltransparenten Material wird vorliegend ein Material verstanden, welches zumindest teilweise eine Transmission von elektromagnetischer Strahlung im sichtbaren Bereich von 380 nm bis 780 nm erlaubt. Vorzugsweise ist das Material transparent ausgebildet und erlaubt eine vollständige Transmission des Lichts im Bereich von 380 nm bis 780 nm.

In einer Ausführungsform der Erfindung beinhaltet die Vogelschutzvorrichtung weiterhin ein Element zur Kontrastverstärkung, wobei zur Ausbildung der optischen Struktur der Strahlungseintrag auf und/oder in dem Element zur Kontrastverstärkung erfolgt.

In einer weiteren Ausführungsform erfolgt durch den Strahlungseintrag in die optische Struktur im Inneren des teiltransparenten Materials eine lokale Veränderung der optischen Eigenschaften des teiltransparenten Materials. Dabei können durch Fokussierung von Laserstrahlung in das teiltransparente Material, wie etwa einem Glaskörper, optisch streuende Mikrorisse oder absorbierende Farbzentren erzeugt werden. Die fokussierte Laserstrahlung führt zu einer lokalen Erwärmung des Glases, in deren Folge sich der Bestrahlungsort thermisch bis zum Spannungsriss ausdehnt (Mikroriss) oder durch die Energie des Laserstrahles eine lokale Änderung der Netzwerkstruktur des Glases zur Erniedrigung der Transmission des Glases führt (Farbzentrum).

In einer weiteren Ausführungsform wird die optische Struktur im Inneren des teiltransparenten Materials durch lasergestützte, lokale Bildung von Mikrorissen und oder Bildung von Farbzentren ausgebildet.

In einer weiteren Ausführungsform wird die optische Struktur an der Oberfläche und/oder im Inneren des kontrastverstärkenden Elementes durch lasergestützte, lokale Veränderung der optischen Eigenschaften des kontrastverstärkenden Elementes ausgebildet.

In einer weiteren Ausführungsform wird die optische Struktur an der Oberfläche und/oder im Inneren des kontrastverstärkenden Elementes durch lasergestützte, lokale Bildung von Mikrorissen und/oder Bildung von Bereichen veränderter Materialdichte gebildet.

In der Ausführungsform der Erfindung wird die optische Struktur im oberflächennahen Bereich des teiltransparenten Materials als metallatom- und/oder metallnanopartikelhaltige, oberflächennahe Schichten durch lasergestützte Diffusion von Metallatomen aus einem mit dem Material in Kontakt stehenden Spendermaterial gebildet. Dabei können über Lasertransferverfahren absorbierende und/oder reflektierende und/oder lichtstreuende Strukturen auf der Glasoberfläche oder bei Kombination mit lasergestützter Diffusion auch dicht unterhalb der Glasoberfläche erzeugt werden. Dabei werden metall- und/oder farbpigmenthaltige Träger in Kontakt mit der Oberfläche des Glases gebracht und mittels Lasereinstrahlung Metallatome und/oder Farbpigmente vom Träger auf die Glasoberfläche transferiert und fixiert. Die so gebildeten optischen Strukturen zeigen je nach Eigenschaft des transferierten Materials z.B. ein gegenüber dem Glas verändertes Absorptions- und/oder Reflexionsvermögen.

In einer weiteren Ausführungsform der Erfindung wird die optische Struktur im oberflächennahen Bereich des teiltransparenten Materials durch lasergestützte Diffusion von Metallatomen, ausgewählt aus Ag, Cu, Au, Ti, Sn, aus einem mit dem teiltransparenten Material in Kontakt stehenden Spendermaterial gebildet.

In einer weiteren Ausführungsform wird eine optisch wirksame Struktur des teiltransparenten Materials durch lokales Bedrucken mittels eines Lasertransferverfahrens ausgebildet.

In einer weiteren Ausführungsform werden auf der Oberfläche des teiltransparenten Materials Schichten mit gegenüber dem Material erhöhten Absorptions- und/oder Reflexionsvermögen angeordnet, welche durch lasergestützten, teilweisen Abtrag der Schichten eine optisch wirksame Struktur ausbilden. Dabei wird das teiltransparente Material, wie etwa Glas, auf der Oberfläche mit Schichten versehen (z.B. vollflächiger Siebdruck) mit gegenüber dem Glas erhöhten Absorptions- und/oder Reflexionsvermögen. Diese Schichten können nachfolgend durch lokale, lasergestützte Erwärmung zum Verdampfen gebracht werden. Damit ist ein teilweiser Abtrag der Schichten von der Glasoberfläche möglich, der eine optisch wirksame und für das Vogelauge wahrnehmbare Struktur ausbildet.

In einer weiteren Ausführungsform wird eine optische Struktur auf der Materialoberfläche des teiltransparenten Materials ausgebildet, wobei das teiltransparente Material mit metall- und/oder farbpigmenthaltigen Schichten bedruckt wird, wobei ein metall- und/oder farbpigmenthaltiger Träger in Kontakt mit der Oberfläche des teiltransparenten Materials gebracht wird und nachfolgend mittels Lasereinstrahlung Metallatome und/oder Farbpigmente vom Träger auf die Materialoberfläche des teiltransparenten Materials transferiert und fixiert werden.

In einer weiteren Ausführungsform werden metall- und/oder farbpigmenthaltige Schichten auf dem teiltransparenten Material angeordnet und diese nachfolgend durch lasergestützten, teilweisen Abtrag und/oder lasergestützte Umwandlung optisch wirksam strukturiert.

Gemäß eines weiteren Aspekts der Erfindung wird eine Vogelschutzvorrichtung vorgeschlagen, hergestellt nach dem erfindungsgemäßen Verfahren. Dabei ist das teiltransparente Material Glas.

In einer Ausführungsform der Erfindung besteht das kontrastverstärkende Element aus einem Glas oder Kunststoff, welcher mindestens im UV-A Wellenlängenbereich ein stark erhöhtes Absorptions- und/oder Reflexions- und/oder Streuvermögen aufweist.

In einer weiteren Ausführungsform der Erfindung weist die optische Struktur ein erhöhtes Absorptions- und/oder Reflexionsvermögen im Vergleich zum teiltransparenten Material und dem kontrastverstärkenden Element auf.

In einer weiteren Ausführungsform der Erfindung ist die optische Struktur als optisches Gitter ausgebildet, welche UV-A-Strahlung streut und/oder beugt.

In einer weiteren Ausführungsform der Erfindung ist die Vogelschutzvorrichtung ein Verbundscheibensicherheitsglas oder ein Isolierglasverbund.

Gegenstand der Erfindung ist auch die Verwendung eines erfindungsgemäßen Verfahrens zur Herstellung einer erfindungsgemäßen Vogelschutzvorrichtung.

Im Gegensatz zum obengenannten Stand der Technik beruht das erfindungsgemäße Herstellungsverfahren auf einem Einschrittverfahren zur Herstellung der optischen Vogelschutzstruktur durch den Einsatz von Lasertechnik. Überraschenderweise hat sich herausgestellt, dass durch Einwirkung von Laserstrahlung auf Glas Strukturen hergestellt werden können, die auch von Vögeln wahrgenommen werden. Die Untersuchung der Wirkung von gelaserten Strukturen in und auf Glasoberflächen mit der Prüfmethode des Flugtunnels zeigte nicht zu erwartende Ergebnisse. In Abhängigkeit des Types der Laserstruktur variierte die Wirkung auf das Flugverhalten der Vögel von einer Lockwirkung bis hin zu einer Vermeidungswirkung. Grundsätzlich zeigen folgende verschiedene Typen von laserstrahl-induzierten Strukturen in oder auf dem Glas eine Wirkung auf das Flugverhalten von Vögeln im Flugtunnel:
- streuende Mikrorisse oder absorbierende Farbzentren im Inneren des Glases,
- absorbierende und/oder reflektierende Strukturen auf und/oder dicht unter der Glasoberfläche,
- absorbierende und/oder reflektierende Strukturen auf beschichteter Glasoberfläche und
- Strukturen auf/im Element zur Kontrastverstärkung.

Mit Hilfe von Laserstrahlung und geeigneter optischer Laserscanntechnik ist es möglich, Strukturen wie z.B. Linien, Punkte oder Raster in nahezu beliebiger Strukturgröße (z.B. Linienbreite = 100 µm bis zu einigen mm) auf den im Architekturglas gewünschten Flächen (z.B. strukturierte Fläche = 10 m2) zu erzeugen. Überraschenderweise stellte sich heraus, dass die Strukturgröße das Flugverhalten der Vögel im Flugtunnel ebenfalls signifikant beeinflusst, auch hier wurde sowohl Lock- als auch Vermeidungsverhalten beobachtet.

Zusätzlich konnte festgestellt werden, dass eine Kombination von Glas mit Laserstruktur und einem UV-A absorbierenden Kunststoff zu einer erhöhten Wahrnehmung der Strukturen durch die Vögel führte. Optische Untersuchungen zeigten, dass die Verwendung des UV-A absorbierenden Kunststoffes zu einer Kontrastverstärkung der optischen Strukturen im UV-A Wellenlängebereich führt.

Damit stellt das erfindungsgemäße Verfahren eine Herstellungstechnologie zur Verfügung, die es vorteilhafterweise erlaubt, die Merkmale Strukturtyp, Strukturgröße und Element zur Kontrastverstärkung so zu kombinieren, dass eine hohe Vermeidungswirkung der Vogelschutzeinrichtung erzielt wird.

Ein weiterer Vorteil des Verfahrens ist die Tatsache, dass die Vogelschutzstruktur in einem Fertigungsschritt realisiert wird. Das Verfahren bietet die Möglichkeit, als Ausgangsmaterial Halbzeuge der Architekturglasverarbeitung, wie z.B. vollflächig mit Farbe beschichtete Gläser, zu verwenden. Diese Halbzeuge stehen massenhaft zur Verfügung und besitzen damit niedrige Materialkosten. Dies führt im Vergleich zum Stand der Technik zu deutlich reduzierten Herstellungskosten für die Vogelschutzeinrichtung.

Weiter stellt die Erfindung auch ein Vogelschutzglas mit einer durch Laserstrahlung erzeugten Struktur und einem Element zur Kontrastverstärkung der Struktur bereit. Das mit dem erfindungsgemäßen Verfahren hergestellte Vogelschutzglas zeichnet sich durch eine erhöhte Wirksamkeit hinsichtlich Vogelschlagvermeidung bei gleichzeitig niedrigen Herstellungskosten aus.

Bevorzugte Weiterbildungen der Erfindung ergeben sich aus den Kombinationen der Ansprüche oder einzelner Merkmale davon.

Die Erfindung soll nachfolgend anhand eines Ausführungsbeispiels und verschiedener, nicht erfindungsgemäßer Offenbarungen näher erläutert werden. Das Ausführungsbeispiel soll dabei die Erfindung beschreiben, ohne diese zu beschränken. Die zugehörigen Zeichnungen (nicht erfindungsgemäß) zeigen in
- Fig. 1:: eine schematische Darstellung des Strahlunsgeintrags in eine auf dem teiltransparenten Material angeordneten Farbschicht, in
- Fig. 2:: eine schematische Darstellung der strukturierten Farbschicht nach erfolgtem Strahlungseintrag, in
- Fig. 3:: eine schematische Anordnung eines zweiten Glases sowie einer PVB-Folie auf der strukturierten Farbschicht zur Ausbildung eines Glasverbundes, in
- Fig. 4:: eine schematische Darstellung des mit bekannten Fertigungsverfahren erhältlichen Glasverbundes und in
- Fig. 5:: eine schematische Darstellung der Wirksamkeit der erfindungsgemäßen Vogelschutzvorrichtung bei Anflug eines Vogels.

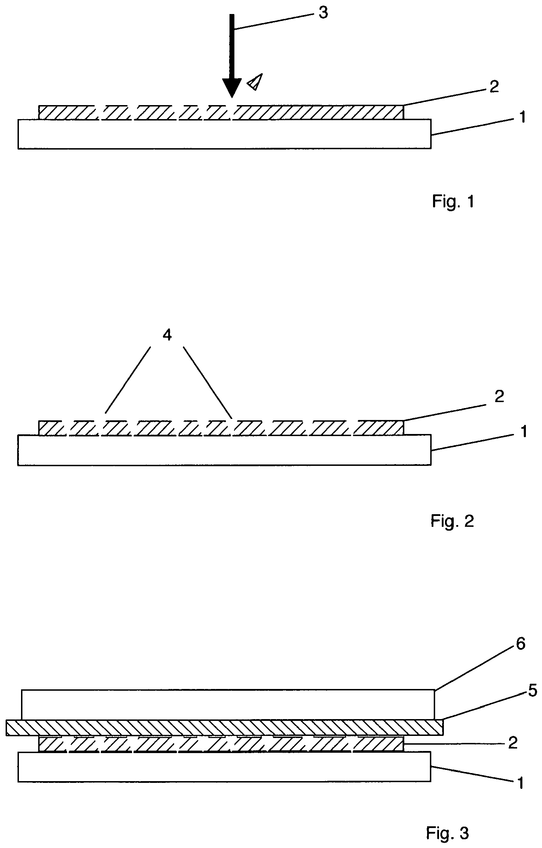

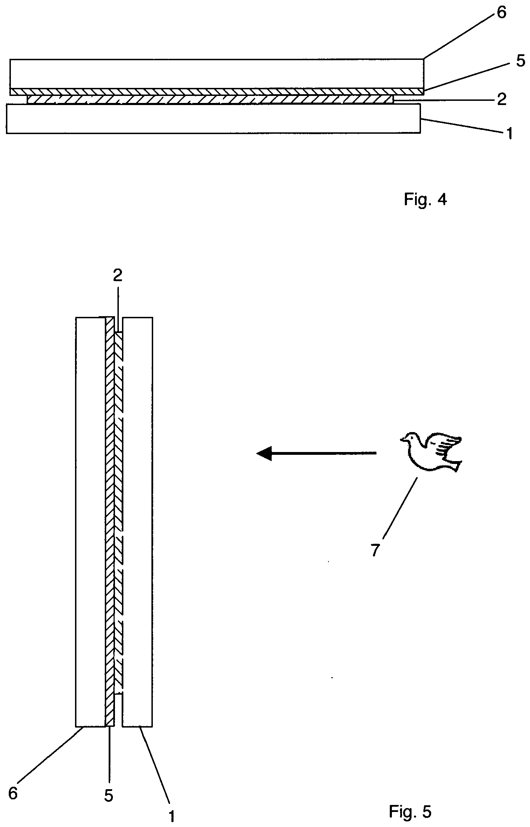

In einer ersten Offenbarung wird anhand der Fig. 1 bis 5 eine Variante eines Herstellungsverfahrens schematisch dargestellt. Dabei wird zunächst eine Farbschicht 2, beispielsweise mittels Siebdruck, auf der Oberfläche des teiltransparenten Materials 1, beispielsweise einer Glasscheibe, angeordnet. Danach erfolgt ein Strahlungseintrag mittels eines Laserstrahls 3, wobei durch lokale Erwärmung der Farbschicht und dem damit verbundenen lokalen Verdampfen der Farbschicht ein Punktmuster 4 auf der Oberfläche der Glasscheibe 1 strukturiert wird. Dazu wird der Laserstrahl 3 über der Farbschicht 2 bewegt und an ausgewählten Bestrahlungsorten wird die Verweilzeit der Laserstrahlung auf der Schicht so realisiert, dass ein Verdampfen der Farbschicht erfolgt (Fig. 1). Anschließend wird die so behandelte Glasscheibe 1 mit einer PVB-Folie 5 versehen (Fig. 2) und mit einem zweiten Glas 6 belegt (Fig. 3). Polyvinylbutyral (PVB) ist ein Kunststoff, der vor allem als Schmelzklebstoff in Form von Zwischenfolien für Verbund-Sicherheitsglas verwendet wird. Dieser Verbund wird über den aus dem Stand der Technik bekannten Fertigungsprozess der Bildung eines Glasverbundes (Verbundscheibensicherheitsglas - VSG) fixiert (Fig. 4).

Das Vogelschutzglas wird nun so in ein Gebäude eingebaut, dass die mit der strukturierten Farbschicht versehene Glasscheibe die Außenseite des Gebäudes bildet. Das Sonnenlicht wird nun in der Farbschicht absorbiert bzw. reflektiert und in den strukturierten Bereichen ungehindert im sichtbaren Spektralbereich in das Gebäude transmittiert. Der UV-A-Wellenlängenbereich der Sonnenstrahlung wird in der PVB-Folie absorbiert. Dadurch entsteht ein für das Vogelauge sichtbares Muster. Der im Anflug befindliche Vogel 7 erkennt dieses Muster und weicht der Scheibe aus (Fig. 5).

In einem weiteren nicht näher dargestellten Ausführungsbeispiel wird das teiltransparente Material 1, beispielsweise ein Floatglas der Dicke 4 mm mit einem Nanosekunden-Laser 3 der Wellenlänge 532 nm und einer mittleren Laserleistung von 2 W und einem in das Innere des Glases 1 fokussierten Laserstrahl 3 (Fokusdurchmesser 40 µm) bestrahlt. Dabei wird der Laserstrahl 3 linienförmig in dem Glasinneren bewegt, so dass eine Parallellinienstruktur ausgebildet wird. Bei der Bestrahlung bilden sich Mikrorisse im Inneren des Glases. Die aus den Mikrorissen zusammengesetzten Parallellinien besitzen eine Dicke von 100 µm und einen Linienabstand von 30 mm.

In einem weiteren nicht näher dargestellten Ausführungsbeispiel wird das teiltransparente Material 1, beispielsweise ein Floatglas der Dicke 4 mm, mit einem Picosekunden-Laser 3 der Wellenlänge 532 nm und einem in das Innere des Glases 1 fokussierten Laserstrahl 3 (Einzelpulsenergien von 10 µJ) bestrahlt. Dabei wird der Laserstrahl 3 linienförmig in dem Glasinneren bewegt, so dass eine Parallellinienstruktur ausgebildet wird. Bei der Bestrahlung bilden sich Farbzentren (braun eingefärbte Glasbereiche) im Inneren des Glases 1. Die aus den Farbzentren zusammengesetzten Parallellinien besitzen eine Dicke von 100 µm und einen Linienabstand von 30 mm.

In einem weiteren nicht näher dargestellten Ausführungsbeispiel der Erfindung wird das teiltransparente Material 1, beispielsweise ein Floatglas der Dicke 4 mm, über ein Tauchverfahren mit einer silberionenhaltigen Salzlösung beschichtet. Nach Trocknung der Schicht wird mit einem CO₂-Laser der Wellenlänge 1064 nm und einem auf die Beschichtung fokussierten Laserstrahl (Fokusdurchmesser 60 µm) bestrahlt. Dabei wird der Laserstrahl 3 linienförmig über die Glasoberfläche 1 bewegt, so dass eine Parallellinienstruktur ausgebildet wird. Bei der Bestrahlung wird die Beschichtung lokal erwärmt und Silberionen der Beschichtung diffundieren in die Glasoberfläche 1 und bilden nach Reduktion der Ionen zu Atomen Nanopartikel im Glasinneren 1. Diese Silber-Nanopartikel färben das Glas 1 braun aufgrund des physikalischen Effektes der Oberflächenplasmonenresonanz. Die aus den braunen Glasbereichen zusammengesetzten Parallellinien besitzen eine Dicke von 100 µm und einen Linienabstand von 30 mm.

In einem weiteren nicht näher dargestellten Ausführungsbeispiel wird das teiltransparente Material 1, beispielsweise ein Floatglas der Dicke 4 mm, in Kontakt mit einer beschichteten Kunststofffolie 2 der Dicke 150 µm gebracht. Die Beschichtung der Folie 2 besteht aus einer keramischen, grauen Farbe. Die Folie wird mit einem Nanosekunden-Laser 3 der Wellenlänge 1064 nm und einer mittleren Laserleistung von 6 W mit einem auf die Folie 2 fokussierten Laserstrahl 3 (Fokusdurchmesser 80 µm) bestrahlt. Dabei wird der Laserstrahl3 linienförmig über die Folie 2 bewegt, so dass eine Parallellinienstruktur ausgebildet wird. Bei der Bestrahlung wird die Beschichtung der Folie 2 auf die Glasoberfläche übertragen, so dass graue Farbstreifen auf der Glasoberfläche ausgebildet werden. Die aus den Farbstreifen zusammengesetzten Parallellinien besitzen eine Dicke von 100 µm und einen Linienabstand von 30 mm.

In einem weiteren nicht näher dargestellten Ausführungsbeispiel wird das teiltransparente Material 1, beispielsweise ein Floatglas der Dicke 4 mm, über ein Sputterverfahren mit einer handelsüblichen Wärmedämmschicht, ein sogenanntes LowE-Schichtsystem, beschichtet. Die Schicht wird mit einem Nanosekunden-Laser der Wellenlänge 1064 nm und enem auf die Beschichtung fokussierten Laserstrahl 3 (Fokusdurchmesser 50 µm) bestrahlt. Dabei wird der Laserstrahl linienförmig über die Glasoberfläche 1 bewegt, so dass eine Parallellinienstruktur ausgebildet wird. Bei der Bestrahlung wird die Beschichtung lokal durch Verdampfen entfernt.

Diese entschichteten Bereiche besitzen ein gegenüber dem beschichteten Glas 1 erniedrigtes Absorptions- und Reflexionsvermögen im ultravioletten Spektralbereich (UV-A). Die aus den entschichteten Glasbereichen zusammengesetzten Parallellinien besitzen eine Dicke von 100 µm und einen Linienabstand von 30 mm.

In einem weiteren nicht näher dargestellten Ausführungsbeispiel wird ein Verbundscheibensicherheitsglas bestehend aus zwei Floatgläsern 1 der Dicke 4 mm, die mit einer Polyvinylbutyral-Folie 5 (PVB-Folie) verbunden sind, mit einem Nanosekunden-Laser der Wellenlänge 1064 nm und einer mittleren Laserleistung von 2 W mit und einem in das Innere der PVB-Folie 5 fokussierten Laserstrahl 3 (Fokusdurchmesser 40 µm) bestrahlt. Dabei wird der Laserstrahl 3 linienförmig in dem Glasinneren 1 bewegt, so dass eine Parallellinienstruktur ausgebildet wird. Bei der Bestrahlung bilden sich lokale Dichteänderungen (Hohlräume) im Inneren der PVB-Folie 5. Die aus den Hohlräumen zusammengesetzten Parallellinien besitzen eine Dicke von 100 µm und einen Linienabstand von 30 mm.

### Liste der Bezugszeichen

- 1 -: teiltransparentes Material
- 2 -: Farbschicht
- 3 -: Strahlungseintrag
- 4 -: Punktmuster
- 5 -: PVB-Folie
- 6 -: zweites Glas
- 7 -: Vogel

## Patentansprüche

1. Verfahren zur Herstellung einer Vogelschutzvorrichtung, wobei die Vogelschutzvorrichtung aus einem zumindest teiltransparenten Material ausgebildet ist und eine für ein Vogelauge sichtbare, optische Struktur beinhaltet, umfassend einen Strahlungseintrag, bevorzugt Laserstrahlung, wobei zur Ausbildung der optischen Struktur der Strahlungseintrag auf und/oder in dem teiltransparenten Material erfolgt **dadurch gekennzeichnet, dass** die optische Struktur im oberflächennahen Bereich des teiltransparenten Materials als metallatom- und/oder metallnanopartikelhaltige, oberflächennahe Schichten durch lasergestützte Diffusion von Metallatomen aus einem mit dem Material in Kontakt stehenden Spendermaterial gebildet wird.

2. Verfahren zur Herstellung einer Vogelschutzvorrichtung nach Anspruch 1, **dadurch gekennzeichnet, dass** die Vogelschutzvorrichtung weiterhin ein Element zur Kontrastverstärkung beinhaltet, wobei zur Ausbildung der optischen Struktur der Strahlungseintrag auf und/oder in dem Element zur Kontrastverstärkung erfolgt.

3. Verfahren zur Herstellung einer Vogelschutzvorrichtung nach Anspruch 1, **dadurch gekennzeichnet, dass** die optische Struktur im oberflächennahen Bereich des teiltransparenten Materials durch lasergestützte Diffusion von Metallatomen, ausgewählt aus Ag, Cu, Au, Ti, Sn, aus einem mit dem teiltransparentenMaterial in Kontakt stehenden Spendermaterial gebildet wird.

4. Verfahren zur Herstellung einer Vogelschutzvorrichtung nach einem der vorhergehenden Ansprüche, **dadurch gekennzeichnet, dass** auf der Oberfläche des teiltransparenten Materials Schichten mit gegenüber dem Material erhöhten Absorptions- und/oder Reflexionsvermögen angeordnet werden, welche durch lasergestützten, teilweisen Abtrag der Schichten eine optisch wirksame Struktur ausbilden.

5. Verfahren zur Herstellung einer Vogelschutzvorrichtung nach einem der vorhergehenden Ansprüche, **dadurch gekennzeichnet, dass** die optische Struktur an der Oberfläche und/oder im Inneren des kontrastverstärkenden Elementes durch lasergestützte, lokale Veränderung der optischen Eigenschaften des kontrastverstärkenden Elementes gebildet wird.

6. Verfahren zur Herstellung einer Vogelschutzvorrichtung nach einem der vorhergehenden Ansprüche, **dadurch gekennzeichnet, dass** die optische Struktur im Inneren des teiltransparenten Materials durch lasergestützte, lokale Bildung von Mikrorissen und/oder Bildung von Farbzentren gebildet wird.

7. Verfahren zur Herstellung einer Vogelschutzvorrichtung nach einem der vorhergehenden Ansprüche, **dadurch gekennzeichnet, dass** eine optische Struktur auf der Materialoberfläche des teiltransparenten Materials ausgebildet wird, wobei das teiltransparente Material mit metall- und/oder farbpigmenthaltigen Schichten bedruckt wird, wobei ein metall- und/oder farbpigmenthaltiger Träger in Kontakt mit der Oberfläche des teiltransparenten Materials gebracht wird und nachfolgend mittels Lasereinstrahlung Metallatome und/oder Farbpigmente vom Träger auf die Materialoberfläche des teiltransparenten Materials transferiert und fixiert werden.

8. Verfahren zur Herstellung einer Vogelschutzvorrichtung nach einem der vorhergehenden Ansprüche, **dadurch gekennzeichnet, dass** metall- und/oder farbpigmenthaltige Schichten auf dem teiltransparenten Material angeordnet werden und diese nachfolgend durch lasergestützten, teilweisen Abtrag und/oder lasergestützte Umwandlung optisch wirksam strukturiert werden.

9. Verfahren zur Herstellung einer Vogelschutzvorrichtung nach einem der vorhergehenden Ansprüche, **dadurch gekennzeichnet, dass** die optische Struktur an der Oberfläche und/oder im Inneren des kontrastverstärkenden Elementes durch lasergestützte, lokale Bildung von Mikrorissen und/oder Bildung von Bereichen veränderter Materialdichte gebildet wird.

10. Vogelschutzvorrichtung, hergestellt nach einem Verfahren gemäß einem der Ansprüche 1 bis 9, **dadurch gekennzeichnet, dass** das teiltransparente Material Glas ist.

11. Vogelschutzvorrichtung, hergestellt nach Anspruch 10, **dadurch gekennzeichnet, dass** das kontrastverstärkende Element aus einem Glas oder Kunststoff besteht, der mindestens im UV-A Wellenlängenbereich ein stark erhöhtes Absorptions- und/oder Reflexions- und/oder Streuvermögen aufweist.

12. Vogelschutzvorrichtung, hergestellt nach einem der Ansprüche 10 oder 11, **dadurch gekennzeichnet, dass** die optische Struktur ein erhöhtes Absorptions- und/oder Reflexionsvermögen im Vergleich zum teiltransparenten Material und dem kontrastverstärkenden Element aufweist.

13. Vogelschutzvorrichtung, hergestellt nach einem der Ansprüche 10 bis 12, **dadurch gekennzeichnet, dass** die optische Struktur als optisches Gitter ausgebildet ist, welche die UV-A-Strahlung streut und/oder beugt.

14. Vogelschutzvorrichtung, hergestellt nach einem der Ansprüche 10 bis 13, **dadurch gekennzeichnet, dass** die Vogelschutzvorrichtung ein Verbundscheibensicherheitsglas oder ein Isolierglasverbund ist.

## Claims

1. Method for producing a bird protection device, wherein the bird protection device is formed from an at least partially transparent material and includes an optical structure visible for a bird's eye, comprising an input of radiation, preferably laser radiation, wherein, for forming the optical structure, the radiation input takes place on and/or in the partially transparent material, **characterized in that** the optical structure is formed in the surface-proximate region of the partially transparent material as metal-atom-containing and/or metal-nanoparticle-containing, surface-proximate layers by laser-assisted diffusion of metal atoms from a donor material that is in contact with the material.

2. Method for producing a bird protection device according to Claim 1, **characterized in that** the bird protection device also includes an element for contrast enhancement, wherein, for forming the optical structure, the radiation input takes place on and/or in the element for contrast enhancement.

3. Method for producing a bird protection device according to Claim 1, **characterized in that** the optical structure in the surface-proximate region of the partially transparent material is formed by laser-assisted diffusion of metal atoms, selected from Ag, Cu, Au, Ti, Sn, from a donor material that is in contact with the partially transparent material.

4. Method for producing a bird protection device according to one of the preceding claims, **characterized in that** layers with increased absorptivity and/or reflectivity with respect to the material are arranged on the surface of the partially transparent material, with the layers forming an optically effective structure by laser-assisted, partial removal of the layers.

5. Method for producing a bird protection device according to one of the preceding claims, **characterized in that** the optical structure on the surface and/or in the interior of the contrast-enhancing element is formed by laser-assisted, local changing of the optical properties of the contrast-enhancing element.

6. Method for producing a bird protection device according to one of the preceding claims, **characterized in that** the optical structure in the interior of the partially transparent material is formed by laser-assisted, local formation of microcracks and/or formation of colour centres.

7. Method for producing a bird protection device according to one of the preceding claims, **characterized in that** an optical structure is formed on the metal surface of the partially transparent material, wherein the partially transparent material is printed with metal-containing and/or colour-pigment-containing layers, wherein a metal-containing and/or colour-pigment-containing carrier is brought into contact with the surface of the partially transparent material and subsequently metal atoms and/or colour pigments are transferred by laser irradiation from the carrier to the material surface of the partially transparent material and fixed.

8. Method for producing a bird protection device according to one of the preceding claims, **characterized in that** metal-containing and/or colour-pigment-containing layers are arranged on the partially transparent material and these layers are subsequently structured optically effectively by laser-assisted, partial removal and/or laser-assisted transformation.

9. Method for producing a bird protection device according to one of the preceding claims, **characterized in that** the optical structure on the surface and/or in the interior of the contrast-enhancing element is formed by laser-assisted, local formation of microcracks and/or formation of regions of changed material density.

10. Bird protection device, produced by a method according to one of Claims 1 to 9, **characterized in that** the partially transparent material is glass.

11. Bird protection device, produced according to Claim 10, **characterized in that** the contrast-enhancing element consists of a glass or plastic which has, at least in the UV-A wavelength range, a greatly increased absorptivity and/or reflectivity and/or scattering power.

12. Bird protection device, produced according to either of Claims 10 and 11, **characterized in that** the optical structure has an increased absorptivity and/or reflectivity in comparison with the partially transparent material and the contrast-enhancing element.

13. Bird protection device, produced according to one of Claims 10 to 12, **characterized in that** the optical structure is formed as an optical grating, which scatters and/or diffracts the UV-A radiation.

14. Bird protection device, produced according to one of Claims 10 to 13, **characterized in that** the bird protection device is a laminated safety glass or an insulating glass laminate.

## Revendications

1. Procédé de fabrication d'un dispositif de protection contre les oiseaux, le dispositif de protection contre les oiseaux étant constitué d'un matériau au moins partiellement transparent et comprenant une structure optique visible à l'oeil des oiseaux, comprenant un apport en rayonnement, de préférence en rayonnement laser, l'apport en rayonnement s'effectuant sur et/ou dans le matériau partiellement transparent en vue de former la structure optique, **caractérisé en ce que** la structure optique, dans la zone proche de la surface du matériau partiellement transparent, est réalisée sous la forme de couches proches de la surface contenant des atomes de métal et/ou des nanoparticules de métal par diffusion assistée par laser d'atomes de métal depuis un matériau distributeur qui se trouve en contact avec le matériau.

2. Procédé de fabrication d'un dispositif de protection contre les oiseaux selon la revendication 1, **caractérisé en ce que** le dispositif de protection contre les oiseaux comprend en outre un élément de renforcement du contraste, l'apport en rayonnement s'effectuant sur et/ou dans l'élément de renforcement du contraste en vue de former la structure optique.

3. Procédé de fabrication d'un dispositif de protection contre les oiseaux selon la revendication 1, **caractérisé en ce que** la structure optique, dans la zone proche de la surface du matériau partiellement transparent, est formée par diffusion assistée par laser d'atomes de métal, choisis parmi l'Ag, le Cu, l'Au, le Ti, le Sn, depuis un matériau distributeur qui se trouve en contact avec le matériau partiellement transparent.

4. Procédé de fabrication d'un dispositif de protection contre les oiseaux selon l'une des revendications précédentes, **caractérisé en ce que** sur la surface du matériau partiellement transparent sont disposées des couches ayant un pouvoir d'absorption et/ou de réflexion accru par rapport au matériau, lesquelles forment une structure optiquement active par enlèvement partiel, assisté par laser, des couches.

5. Procédé de fabrication d'un dispositif de protection contre les oiseaux selon l'une des revendications précédentes, **caractérisé en ce que** la structure optique au niveau de la surface et/ou à l'intérieur de l'élément de renforcement du contraste est formée par modification locale, assistée par laser, des propriétés optiques de l'élément de renforcement du contraste.

6. Procédé de fabrication d'un dispositif de protection contre les oiseaux selon l'une des revendications précédentes, **caractérisé en ce que** la structure optique à l'intérieur du matériau partiellement transparent est formée par formation locale, assistée par laser, de microfissures et/ou par formation de centres de couleur.

7. Procédé de fabrication d'un dispositif de protection contre les oiseaux selon l'une des revendications précédentes, **caractérisé en ce qu'**une structure optique est formée sur la surface de matériau du matériau partiellement transparent, le matériau partiellement transparent recevant une impression avec des couches contenant du métal et/ou des pigments de couleur, un élément porteur contenant du métal et/ou des pigments de couleur étant amené en contact avec la surface du matériau partiellement transparent et des atomes de métal et/ou des pigments de couleur étant ensuite, au moyen d'un rayonnement laser, transférés de l'élément porteur sur la surface du matériau partiellement transparent et fixés.

8. Procédé de fabrication d'un dispositif de protection contre les oiseaux selon l'une des revendications précédentes, **caractérisé en ce que** des couches contenant du métal et/ou des pigments de couleur sont disposées sur le matériau partiellement transparent et celles-ci sont ensuite structurées de manière optiquement active par enlèvement partiel, assisté par laser, et/ou par conversion assistée par laser.

9. Procédé de fabrication d'un dispositif de protection contre les oiseaux selon l'une des revendications précédentes, **caractérisé en ce que** la structure optique au niveau de la surface et/ou à l'intérieur de l'élément de renforcement du contraste est formée par formation locale, assistée par laser, de microfissures et/ou formation de zones ayant une densité de matériau modifiée.

10. Dispositif de protection contre les oiseaux, fabriqué conformément à un procédé selon l'une des revendications 1 à 9, **caractérisé en ce que** le matériau partiellement transparent est du verre.

11. Dispositif de protection contre les oiseaux, fabriqué selon la revendication 10, **caractérisé en ce que** l'élément de renforcement du contraste se compose d'un verre ou d'une matière plastique qui possède, au moins dans la plage des longueurs d'onde UV-A, un pouvoir d'absorption et/ou de réflexion et/ou de dispersion fortement accru.

12. Dispositif de protection contre les oiseaux, fabriqué selon l'une des revendications 10 et 11, **caractérisé en ce que** la structure optique possède un pouvoir d'absorption et/ou de réflexion accru en comparaison du matériau partiellement transparent et de l'élément de renforcement du contraste.

13. Dispositif de protection contre les oiseaux, fabriqué selon l'une des revendications 10 à 12, **caractérisé en ce que** la structure optique est réalisée sous la forme d'une grille optique qui disperse et/ou diffracte le rayonnement UV-A.

14. Dispositif de protection contre les oiseaux, fabriqué selon l'une des revendications 10 à 13, **caractérisé en ce que** le dispositif de protection contre les oiseaux est un verre de sécurité feuilleté ou un composé de verre isolant.
